# FASCICULE DE BREVET EUROPEEN

(11) **EP 0 810 963 B1**
(45) Date de publication et mention de la délivrance du brevet: **06.05.1999**
(21) Numéro de dépôt: 96904135.9
(22) Date de dépôt: 14.02.1996
(51) Int. Cl.: B65G 47/244, B07C 5/36, B07B 13/075

(54) **DISPOSITIF D'ALIMENTATION POUR UNITE DE TRI, UNITE DE TRI AVEC CE DISPOSITIF D'ALIMENTATION, CALIBREUSE ET DISPOSITIF DE DISTRIBUTION**
ZUFÜHRVORRICHTUNG FÜR EINE SORTIERVORRICHTUNG, SORTIERVORRICHTUNG MIT DIESE ZUFÜHRVORRICHTUNG, KALIBRIERUNG UND VERTEILVORRICHTUNG
FEED DEVICE FOR A SORTING UNIT, SORTING UNIT WITH SUCH A FEED DEVICE, A GRADING DEVICE AND DISTRIBUTION DEVICE

(30) Priorité: 21.02.1995 FR 9502223
(43) Date de publication de la demande: 10.12.1997
(73) Titulaire: Matériel pour l' Arboriculture Fruitière, 82000 Montauban (FR)
(72) Inventeur: PERVIEUX, Jacques, F-82140 Saint-Etienne-de-Tulmont (FR)
(74) Mandataire: Cabinet BARRE LAFORGUE & associés
(86) Numéro de dépôt international: FR9600237
(87) Numéro de publication internationale: WO9626140

(56) Documents cités:
- EP-A- 0 185 424
- EP-A- 0 340 164
- EP-A- 0 491 407
- EP-A- 0 553 933
- FR-A- 1 445 604
- FR-A- 2 412 481
- GB-A- 1 276 361
- GB-A- 1 348 570
- GB-A- 1 593 149
- US-A- 1 337 257
- US-A- 4 033 450

## Description

L'invention concerne un dispositif d'alimentation d'une unité de tri de produits longiformes, notamment de légumes tels que des carottes. Elle s'étend à une unité de tri comportant un tel dispositif d'alimentation, un dispositif de distribution et une calibreuse.

Les opérations de calibrage de fruits ou légumes nécessitent d'individualiser ces derniers en vue de permettre leur analyse optique. Cette opération s'avère délicate lorsque de tels fruits ou légumes consistent en des produits longiformes, tels que par exemple des carottes, du fait que l'alimentation des calibreuses requiert une mise en lignes desdits produits à partir d'un flot de produits délivrés en vrac.

Une telle mise en lignes nécessite, en effet, d'ordonner les produits avec un flux constant apte à assurer un bon rendement de la calibreuse, selon des rangées parallèles dans chacune desquelles lesdits produits sont suffisamment espacés pour permettre leur analyse optique individuelle. GB-A-1 276 361 et FR-A-2 412 481 décrivent un dispositif d'alimentation conforme au préambule de la revendication 1.

Actuellement, il n'existe pas de dispositif d'alimentation permettant d'alimenter les calibreuses dans des conditions optimales de rendement et de fiabilité, et la présente invention vise à combler cette lacune en fournissant un dispositif d'alimentation apte à scinder un flot de produits longiformes en une pluralité de rangées parallèles dans chacune desquelles lesdits produits sont ordonnés les uns à la suite des autres.

Un autre objectif de l'invention est de fournir une unité de tri de produits longiformes présentant une cadence et une fiabilité optimales.

A cet effet, l'invention vise en premier lieu, un dispositif d'alimentation d'une unité de tri de produits longiformes, notamment de légumes tels que des carottes, apte, à partir d'un flot de produits délivrés en vrac, à ordonner ces produits selon des rangées parallèles dans chacune desquelles ledits produits sont alignés les uns à la suite des autres, ledit dispositif d'alimentation comprenant un convoyeur incliné s'étendant selon une pente ascendante, comportant une pluralité de rouleaux transversaux montés libres en rotation chacun autour d'un axe transversal porté, vers ses extrémités, par deux chaînes sans fin longitudinales entraînées en synchronisme, et espacés de façon que deux rouleaux successifs définissent entre eux un logement pour un produit, ledit convoyeur comportant longitudinalement à partir de son extrémité basse d'admission des produits :
- un premier tronçon longitudinal inférieur comportant des moyens d'entraînement en rotation des rouleaux autour de leur axe, selon un même sens de rotation que le sens de défilement du convoyeur,
caractérisé en ce qu'il comprend:
- un deuxième tronçon longitudinal intermédiaire le long duquel les rouleaux sont libres en rotation,
- et un troisième tronçon longitudinal supérieur comportant des moyens d'entraînement en rotation des rouleaux autour de leur axe, selon un sens de rotation inverse par rapport au sens de défilement du convoyeur.

Selon ce dispositif, les produits sont tout d'abord amenés à monter le long du tronçon longitudinal inférieur grâce à l'entraînement en rotation des rouleaux selon un même sens de rotation que le sens de défilement du convoyeur. Après une zone intermédiaire de transfert de rotation, ces produits parviennent ensuite au niveau du tronçon longitudinal supérieur le long duquel l'entraînement en rotation des rouleaux selon un sens de rotation inverse par rapport au sens de défilement au convoyeur provoque, en premier lieu, un rejet vers le tronçon inférieur longitudinal des produits non correctement logés entre deux rouleaux, et en second lieu, une séparation des produits éventuels se chevauchant ou se superposant entre les rouleaux.

Dans la pratique, un tel dispositif permet, avec une cadence d'alimentation élevée, d'ordonner les produits les uns à la suite des autres entre les différents rouleaux, avec un taux de remplissage de 100 % du convoyeur. A titre d'exemple, avec des produits tels que des carottes, la vitesse de défilement d'un convoyeur conforme à l'invention peut atteindre sensiblement un m/s.

Selon une autre caractéristique de l'invention, le tronçon intermédiaire du convoyeur comprend une roue de friction disposée de façon à présenter un contact tangentiel avec la génératrice inférieure des rouleaux, ladite roue de friction étant entraînée en rotation par les moyens d'entraînement en rotation du tronçon supérieur dudit convoyeur.

La présence de cette roue de friction a pour avantage de stopper la rotation des rouleaux conférée par les moyens d'entraînement du tronçon longitudinal inférieur, et d'inverser cette rotation avant que lesdits rouleaux ne parviennent au droit du tronçon longitudinal supérieur.

Selon une autre caractéristique de l'invention, l'axe de chaque rouleau comporte, vers une de ses extrémités, au moins une roue dentée, les moyens d'entraînement en rotation desdits rouleaux consistant, au droit du tronçon inférieur en une chaîne fixe, et au droit du tronçon supérieur en une chaîne longitudinale sans fin entraînée avec une vitesse de défilement sensiblement supérieure à celle du convoyeur, lesdites chaînes s'étendant selon une pente identique à celle dudit convoyeur et étant agencées pour engréner avec les roues dentées des rouleaux.

De plus, le dispositif d'alimentation comporte avantageusement des éléments de guidage latéral des roues dentées des axes des rouleaux aptes à maintenir lesdites roues le long d'une trajectoire rectiligne.

Par ailleurs, chaque chaîne d'entraînement en rotation des rouleaux présente préférentiellement un tronçon inférieur initial s'étendant selon une pente présentant une inclinaison sensiblement supérieure à celle du convoyeur.

Une telle inclinaison initiale permet d'obtenir un engrenage progressif des roues dentées qui annihile tout risque d'endommagement de ces dernières.

L'invention s'étend à une unité de tri de produits longiformes, notamment de légumes tels que des carottes, comprenant, outre un dispositif d'alimentation tel que décrit ci-dessus :
- un dispositif de distribution des produits comprenant un convoyeur présentant une zone de chargement disposée à l'aplomb de l'extrémité supérieure du dispositif d'alimentation et une zone de distribution s'étendant horizontalement, ledit convoyeur comportant :
   . une pluralité de volets transversaux inclinés aptes à pivoter chacun autour d'un axe transversal porté, vers ses extrémités, par deux chaînes sans fin longitudinales entraînées en synchronisme, lesdits volets étant agencés pour que deux volets successifs définissent entre eux un logement de largeur variable en fonction de leur inclinaison respective,
   . des moyens de basculement des volets adaptés, d'une part, pour les disposer selon une inclinaison déterminant une largeur de logement minimale, au droit de la zone de chargement, adaptée pour permettre de réceptionner la totalité des produits délivrés par le dispositif d'alimentation, et d'autre part, pour engendrer le basculement desdits volets de façon à leur conférer une inclinaison apte à permettre le déchargement des produits portés par ceux-ci au droit de zones de déchargement,
- une calibreuse dotée de moyens d'analyse optique, et d'une pluralité de lignes de transport parallèles comportant des moyens de transfert dotés d'un tronçon initial de chargement des produits disposé à l'aplomb d'une zone de déchargement dudit dispositif de distribution.

Cette unité de tri comporte donc un dispositif de distribution qui assure le transfert des rangées de produits ordonnés par le dispositif d'alimentation vers une calibreuse, permettant ainsi d'alimenter cette dernière avec une cadence identique à celle dudit dispositif d'alimentation.

Selon une autre caractéristique de l'invention visant le dispositif de distribution :
- chaque volet dudit dispositif de distribution est doté, au droit d'au moins une de ses extrémités, d'une roulette à axe de rotation horizontal parallèle à l'axe de pivotement desdits volets,
- les moyens de basculement comprennent au moins une piste longitudinale horizontale agencée pour constituer une surface de roulement pour les roulettes, chacune desdites pistes étant dotée d'au moins une interruption de la surface de roulement au droit d'une zone de déchargement, apte à conduire à un basculement des volets.

De plus, les moyens de transfert des produits comprennent avantageusement, pour chaque ligne de transport, deux bandes transporteuses parallèles entraînées en synchronisme, agencées relativement l'une par rapport à l'autre de façon à définir transversalement une goulotte en forme de V apte à loger et transporter une rangée de produits.

Ces moyens de transfert sont, en outre, préférentiellement scindés longitudinalement en deux tronçons alignés dans le prolongement l'un de l'autre : un premier tronçon incorporant le tronçon initial de chargement, dont les deux bandes transporteuses sont entraînées en synchronisme avec une vitesse de défilement inférieure à celle de la calibreuse, et un tronçon terminal dont les bandes transporteuses sont entraînées avec une vitesse de défilement égale à celle de la calibreuse.

Cette disposition a pour avantage, de permettre d'augmenter la distance séparant les produits avant que ces derniers ne parviennent à la calibreuse.

Par ailleurs, selon une autre caractéristique de l'invention, les moyens de basculement des volets du dispositif de distribution sont adaptés pour engendrer successivement :
- un basculement initial apte à écarter les volets d'une distance prédéterminée adaptée pour engendrer l'élimination des produits présentant des dimensions transversales inférieures à une valeur inférieure de calibrage donnée,
- au moins un basculement supplémentaire apte à permettre le déchargement des produits de dimensions transversales comprises entre la valeur inférieure de calibrage et une valeur supérieure de calibrage donnée,
- un basculement supplémentaire final apte à permettre l'élimination de tous les produits non déchargés le long du convoyeur du dispositif de distribution.

Un tel dispositif de distribution permet d'effectuer un tri initial conduisant à l'élimination systématique des produits dont le calibre est inférieur ou supérieur à des valeurs de calibrage données.

Selon une autre caractéristique de l'invention, l'unité de tri comprend :
- un premier dispositif d'alimentation tel que décrit ci-dessus,
- un premier dispositif de distribution adapté pour éliminer les produits de dimensions respectivement inférieures à la valeur inférieure de calibrage et supérieures à la valeur supérieure de calibrage, et pour décharger alternativement un nombre de rangées de produits au droit de deux zones de déchargement successives,
- deux ensembles secondaires d'alimentation et de distribution parallèles s'étendant orthogonalement par rapport au premier dispositif de distribution, agencés pour être alimentés chacun en produits délivrés au droit d'une des zones de déchargement dudit premier dispositif de distribution,
   . chacun desdits ensembles comportant successivement un dispositif d'alimentation et un dispositif de distribution,
   . le dispositif de distribution d'un desdits ensembles étant adapté pour posséder une zone de déchargement apte à permettre de décharger simultanément un nombre n de rangées de produits à l'aplomb de n lignes de transport des moyens de transfert de la calibreuse,
   . le dispositif de distribution de l'autre ensemble présentant une longueur supérieure à celui du premier ensemble, et étant adapté pour posséder une zone de déchargement apte à permettre de décharger un nombre m de rangées de produits à l'aplomb de m lignes de transport des moyens de transfert de la calibreuse parallèles aux n lignes de transport précitées.

Une telle unité offre l'avantage de présenter une cadence très élevée. En effet, la présence des deux ensembles secondaires d'alimentation et de distribution permet d'alimenter simultanément un grand nombre de lignes de transport. A titre d'exemple, une telle unité de tri peut comporter une calibreuse dotée de douze lignes de transport parallèles.

Par ailleurs, la calibreuse comprend préférentiellement un convoyeur comportant :
- une pluralité de doigts de convoyage transversaux et parallèles, articulés sur des supports portés par des chaînes sans fin longitudinales agencées pour qu'une série longitudinale de doigts de convoyage s'étende dans le prolongement de chaque ligne de transport des moyens de transfert, lesdits doigts étant dotés de moyens de verrouillage aptes à les maintenir dans une position de convoyage dans laquelle un produit est porté par un nombre de doigts successifs donné,
- des moyens de déclenchement des moyens de verrouillage des doigts de convoyage adaptés pour engendrer de façon sélective le basculement d'un nombre de doigts donné en vue du déchargement du produit porté par ceux-ci dans des zones de déchargement.

De plus, selon une autre caractéristique de l'invention visant cette calibreuse :
- chaque doigt de convoyage est prolongé par un corps comportant un orifice présentant une forme oblongue à grand axe vertical logeant un axe d'articulation solidaire d'un support, apte à permettre un débattement dudit doigt selon une direction verticale, ledit corps comportant transversalement une face inférieure frontale convexe dans laquelle est ménagée une encoche inférieure apte à loger, dans la position de convoyage, un ergot solidaire du support, et un talon d'éjection prolongeant ledit corps vers le bas et disposé à l'opposé de la face inférieure convexe par rapport à l'encoche,
- les moyens de déclenchement comportent une came associée à des moyens de pivotement aptes à la faire basculer autour d'un axe longitudinal, entre une position active où elle se trouve sur la trajectoire des talons des doigts de convoyage et provoque un déplacement vers le haut desdits talons et un basculement initial desdits doigts, et une position passive où ladite came permet le passage des talons.

Une telle conception permet d'obtenir un déclenchement très aisé des doigts de convoyage, le basculement de ces derniers, une fois le déverrouillage initié par une came, étant obtenu grâce au poids des produits portés par lesdits doigts de verrouillage.

En outre, chaque doigt de convoyage comporte avantageusement un tampon en un matériau compressible logé dans l'orifice oblong, adapté pour faire office de moyens élastiques aptes à maintenir verrouillés lesdits doigts de convoyage.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :
- la figure 1 est une vue en plan schématique d'une unité de tri conforme à l'invention,
- la figure 2 est une coupe longitudinale schématique d'un dispositif d'alimentation conforme à l'invention,

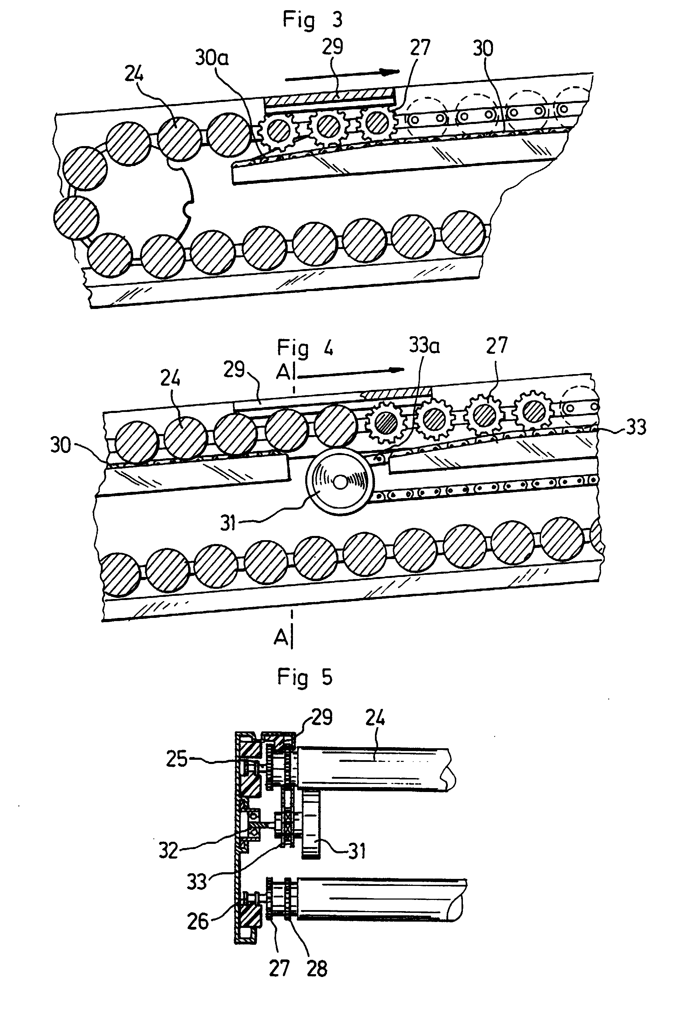

- la figure 3 est une coupe longitudinale partielle, à échelle agrandie, du tronçon longitudinal inférieur de ce dispositif d'alimentation,
- la figure 4 est une coupe longitudinale partielle, à échelle agrandie, des tronçons longitudinaux intermédiaire et supérieur de ce dispositif d'alimentation,
- la figure 5 en est une coupe transversale partielle, à échelle agrandie, par un plan A,

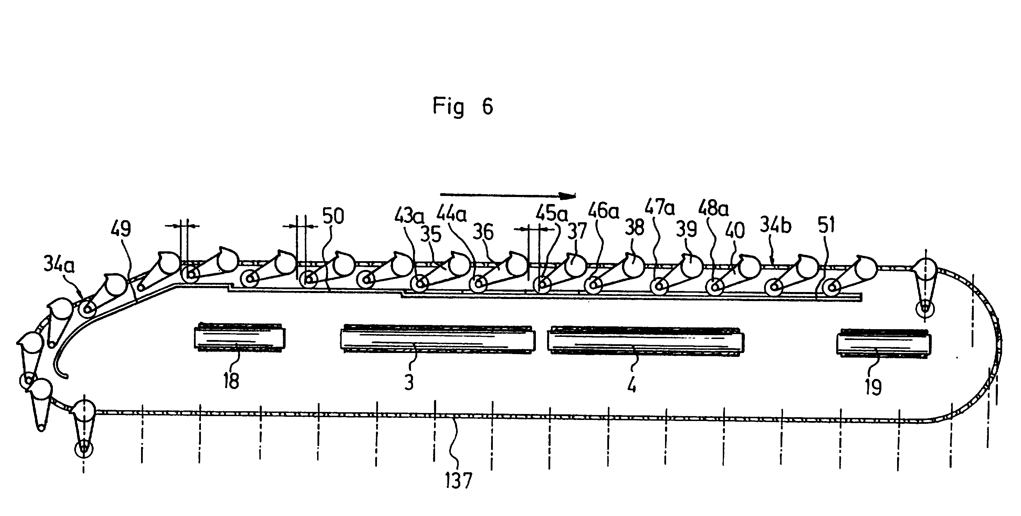

- la figure 6 est une coupe longitudinale schématique d'un dispositif de distribution conforme à l'invention,
- la figure 7 est une vue de dessus schématique partielle du premier dispositif de distribution de l'unité de tri,
- la figure 8 est une vue de dessus schématique partielle du dispositif de distribution d'un des ensembles secondaires d'alimentation et de distribution de cette unité de tri,

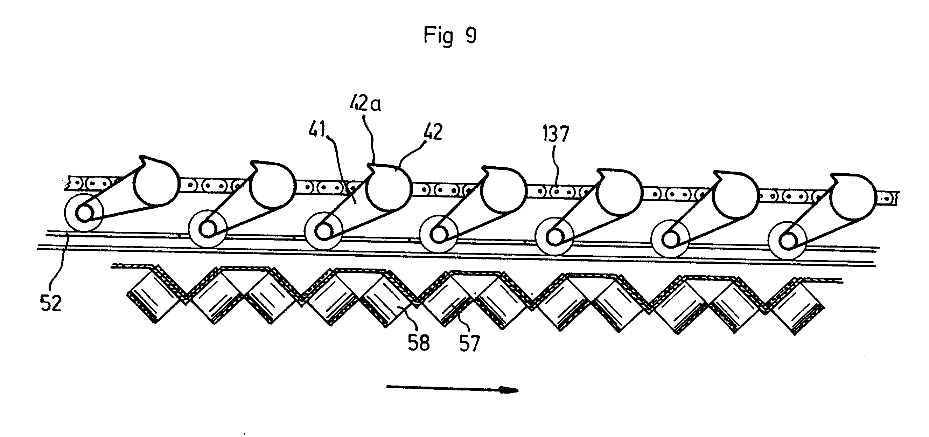

- la figure 9 est une coupe longitudinale partielle, à échelle agrandie, de ce dispositif de distribution, représentant également les moyens de transfert des produits vers la calibreuse,
- la figure 10 est une vue de dessus partielle de ces moyens de transfert,
- la figure 11 est une vue de dessus partielle d'une ligne de transport de ces moyens de transfert au niveau de sa liaison avec la calibreuse,
- la figure 12 est une coupe longitudinale représentant la liaison entre les moyens de transfert et la calibreuse,
- la figure 13 est une coupe transversale, à échelle agrandie, représentant, d'une part, les doigts de convoyage de la calibreuse disposés en position basculée pour l'un desdits doigts et en position verrouillée pour l'autre doigt, et d'autre part, les moyens de déclenchement de ces doigts de convoyage,
- la figure 14 est une coupe longitudinale partielle de la calibreuse représentant des moyens de déclenchement final aptes à faire basculer la totalité des doigts de convoyage,
- et la figure 15 est une coupe longitudinale partielle de la calibreuse représentant un organe d'appui de ré-enclenchement des doigts de convoyage.

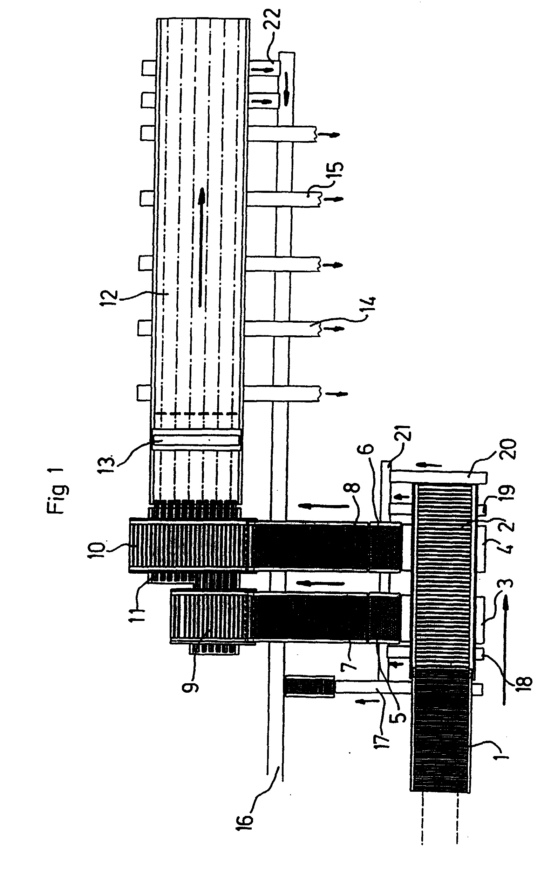

L'unité de tri représentée à la figure 1 est particulièrement adaptée pour effectuer le tri de légumes tels que des carottes en fonction de critères de sélection prédéterminés liés au diamètre, à la longueur, à la couleur, à la courbure, ... de ces légumes.

Cette unité de tri comporte trois postes principaux :
- un premier poste comportant un dispositif d'alimentation 1 apte, à partir d'un flot de carottes délivrées en vrac, à ordonner lesdites carottes selon des rangées parallèles, et un dispositif de distribution 2 conçu notamment pour éliminer les carottes présentant des diamètres respectivement inférieurs et supérieurs à des calibres donnés, et pour délivrer les carottes non éliminées au droit de deux zones de déchargement :
- un deuxième poste comportant deux ensembles secondaires d'alimentation et de distribution parallèles s'étendant orthogonalement par rapport au dispositif de distribution 2 du premier poste, et comportant chacun un tronçon de chargement situé à l'aplomb dudit dispositif de distribution, lesdits ensembles secondaires étant adaptés pour alimenter simultanément douze lignes de transport et comprenant chacun successivement :
   . une bande transporteuse 3, 4 dotée d'un tronçon initial de chargement disposé à l'aplomb d'une zone de déchargement du dispositif de distribution 2 du premier poste,
   . un convoyeur à grille 5, 6 apte à permettre l'élimination de morceaux de carottes,
   . un dispositif d'alimentation 7, 8 apte à ré-ordonner les carottes selon des rangées parallèles,
   . et un dispositif de distribution 9, 10 conçu pour permettre de décharger simultanément six rangées de carottes à l'aplomb de six lignes de transport parallèles, lesdits dispositifs de distribution étant adaptés pour que leurs zones de déchargement soient décalées longitudinalement de façon à alimenter douze lignes de transport,
- un troisième poste comportant des moyens de transfert 11 dotés de tronçons initiaux de chargement situés respectivement à l'aplomb des dispositifs de distribution 9, 10 du deuxième poste, et une calibreuse 12 à douze lignes de transport dotée de moyens d'analyse optique 13 de tout type connu en soi tels que caméra, ..., et de bandes transporteuses telles que 14, 15 d'évacuation des produits calibrés.

Cette unité de tri comporte, en outre, de façon classique, des moyens d'évacuation des déchets aptes à délivrer lesdits déchets vers un collecteur d'évacuation 16, et comportant principalement : un tapis d'évacuation 17 disposé à l'aplomb du dispositif d'alimentation 1 du premier poste, agencé pour permettre d'évacuer des produits retirés manuellement, trois tapis d'évacuation 18-20 disposés à l'aplomb du dispositif de distribution 2 du premier poste, un tapis d'évacuation 21 situé à l'aplomb des convoyeurs à grille 5, 6, et un tapis d'évacuation 22 situé à l'aplomb de l'extrémité de la calibreuse 12.

En premier lieu, les dispositifs d'alimentation respectifs 1, 7, 8 des premier et deuxième postes sont de conception identique et comprennent un convoyeur 23 s'étendant selon une pente ascendante inclinée d'un angle sensiblement compris entre quinze et vingt-cinq degrés.

Ce convoyeur 23 comporte une pluralité de rouleaux transversaux tels que 24 montés libres en rotation autour d'axes transversaux tels que 25 portés chacun, vers leurs extrémités, par deux chaînes sans fin longitudinales telles que 26 entraînées en synchronisme, lesdits rouleaux étant espacés de façon que deux rouleaux successifs délimitent un logement apte à loger une rangée de carottes.

Chacun des rouleaux 24, comporte en outre, vers une de ses extrémités, deux roues dentées 27, 28 espacées entre lesquelles viennent se loger des organes de guidage latéral fixes tels que 29 aptes à maintenir lesdits roues dentées le long d'une trajectoire rectiligne. Il est à noter que la roue dentée intérieure 28 a pour seul but de délimiter une gorge avec l'extrémité des rouleaux, dans laquelle vient se loger un retour de carter conçu pour éviter que des carottes viennent se coincer latéralement.

Le convoyeur 23 comporte, par ailleurs, longitudinalement, à partir de son extrémité basse d'admission des produits, trois tronçons distincts :
- un premier tronçon longitudinal inférieur 23a comportant des moyens d'entraînement en rotation des rouleaux 24 selon un même sens de rotation que celui de défilement du convoyeur 23. Ces moyens d'entraînement en rotation comprennent une chaîne longitudinale fixe 30 agencée pour engréner avec une des roues dentées 27 des rouleaux 24. Cette chaîne fixe 30 comporte, en outre, un tronçon initial 30a s'étendant selon une pente présentant une inclinaison sensiblement supérieure à celle du convoyeur 23 de façon à "attaquer" progressivement les roues dentées 27,
- un deuxième tronçon longitudinal intermédiaire 23b d'inversion du sens de rotation des rouleaux 24, comportant une roue de friction 31 disposée de façon à présenter un contact tangentiel avec la génératrice inférieure desdits rouleaux, ladite route de friction étant portée par un axe transversal monté dans un palier 32 et entraîné en rotation selon un sens de rotation inverse par rapport à celui du convoyeur 23,
- un troisième tronçon longitudinal 23c comportant des moyens d'entraînement en rotation des rouleaux 24 selon un sens de rotation inverse par rapport à celui du convoyeur 23, adaptés pour entraîner également en rotation la roue de friction 31. Ces moyens d'entraînement en rotation comprennent une chaîne sans fin longitudinale 33, adaptée pour engréner avec la roue dentée 27 des rouleaux 24. Cette chaîne 33 comporte, en outre, également, un tronçon initial 33a présentant une inclinaison sensiblement supérieure à celle du convoyeur 23.

De plus, cette chaîne 33 est entraînée avec une vitesse légèrement supérieure à celle de défilement du convoyeur 23.

Tel qu'indiqué plus haut, un tel convoyeur 23 permet d'ordonner les produits entre les rouleaux 24 de façon que ces derniers soient alignés les uns à la suite des autres selon des rangées parallèles.

En second lieu, les dispositifs de distribution respectifs 2, 9, 10 des premier et deuxième postes sont similaires dans leur principe, la différence entre lesdits dispositifs de distribution se situant dans la répartition des zones de déchargement de ces derniers.

Tous ces dispositifs de distribution comprennent un convoyeur 34 présentant une zone de chargement 34a inclinée agencée pour se trouver à l'aplomb des dispositifs d'alimentation 1, 7, 8 correspondants, et une zone de distribution 34b horizontale.

Ce convoyeur 34 comporte une pluralité de volets transversaux inclinés 35, 36, 37, 38, 39, 40 aptes à pivoter autour d'axes transversaux portés chacun, vers leurs extrémités, par deux chaînes sans fin longitudinales telles que 137 entraînées en synchronisme, lesdits volets étant agencés pour que deux volets successifs délimitent entre eux un logement de largeur variable fonction de leur inclinaison respective.

Chacun de ces volets 35-40 est constitué transversalement d'un profil en forme de V 41 s'ouvrant en direction de l'axe de pivotement, obturé au niveau de sa base par un tube creux 42 de diamètre supérieur à la longueur de ladite base. Ce tube creux 42 loge, en outre, au niveau de chacune de ses extrémités, un embout (non représenté) apte à pivoter relativement à l'axe de pivotement. De plus, ce tube creux 42 comporte un ergot longitudinal 42a agencé de façon à faire saillie par rapport à la face supérieure du profil 41, et adapté pour éviter que des produits ne "sautent" entre deux rangées de volets 35-40 lors de l'alimentation du dispositif de distribution 2, 9, 10.

Les dispositifs de distribution comprennent, en outre, des moyens de basculement des volets 35-40 adaptés, d'une part, pour les disposer selon une inclinaison déterminant un logement de largeur minimale au droit de la zone de chargement 34a du convoyeur 34, et d'autre part, pour engendrer le basculement desdits volets au droit de zones de déchargement.

Ces moyens de basculement comprennent, en premier lieu, pour chaque volet 35-40, deux roulettes, telles que 43a, 43b, 44a, 44b, 45a, 45b, 46a, 46b, 47a, 47b, 48a, 48b à axes de rotation horizontaux parallèles à l'axe de pivotement, décalées latéralement par rapport auxdits volets d'une distance prédéterminée variable d'un volet à un autre tel qu'explicité ci-dessous. A cet effet, chacune de ces roulettes 43-48 est portée par un axe s'étendant transversalement dans le prolongement de l'extrémité inférieure du profil 41 des volets 35-40.

Les moyens de basculement comportent, en outre, des pistes longitudinales horizontales 49-53 agencées pour constituer des surfaces de roulement pour les roulettes 43-48, chacune desdites pistes étant dotée de zones d'interruption de la surface de roulement aptes à conduire à un basculement des volets 35-40.

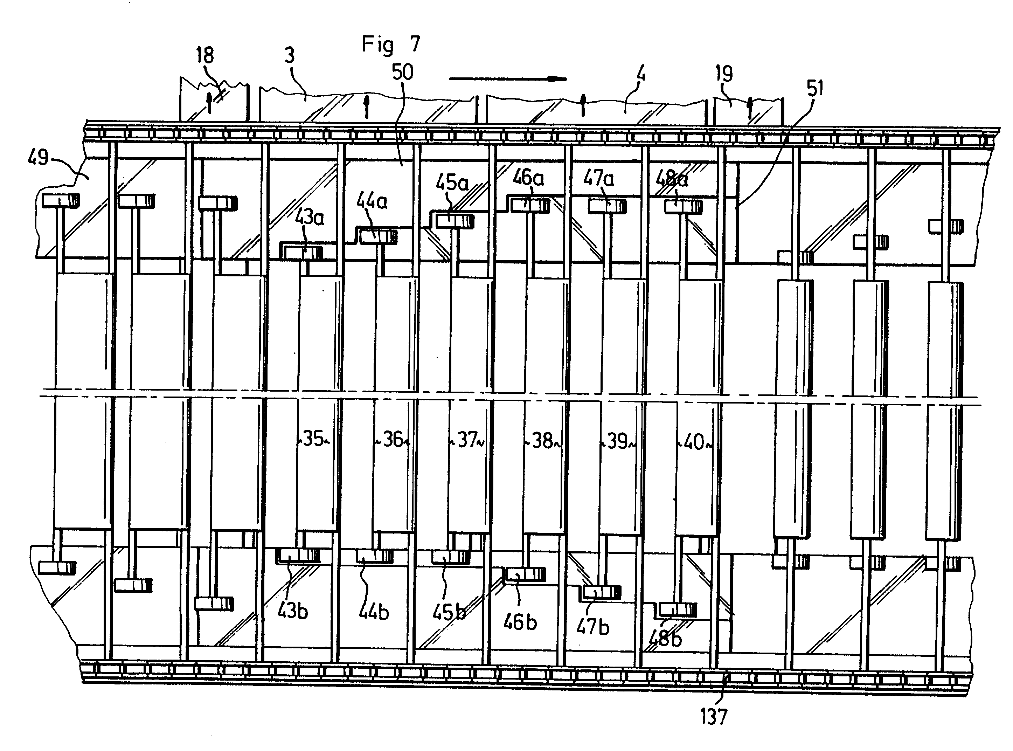

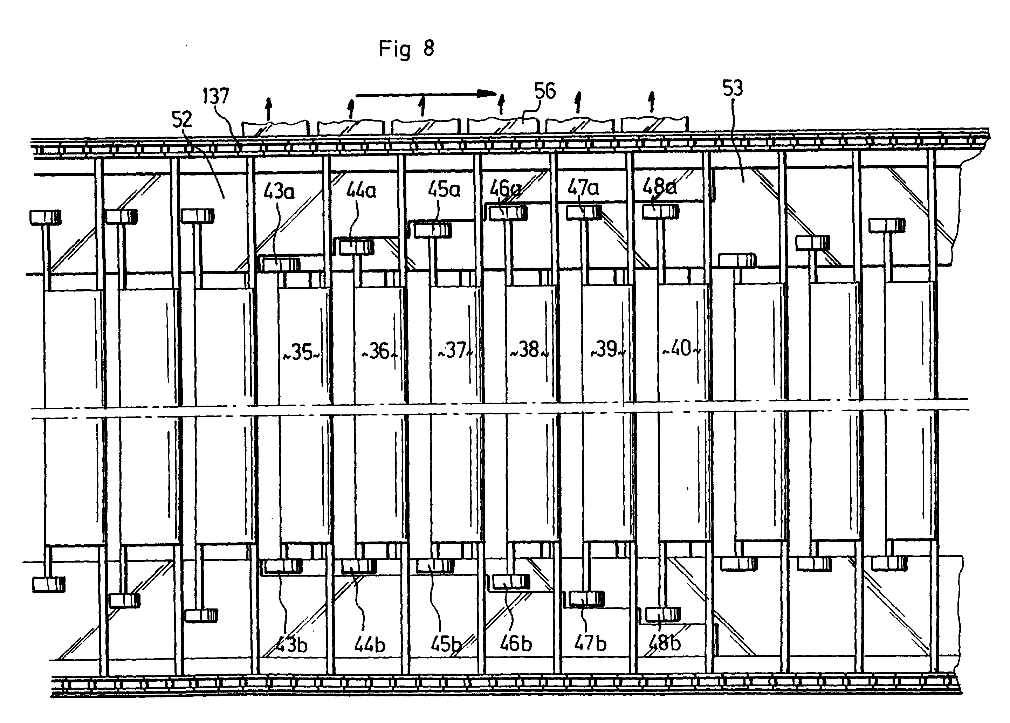

Tel que représenté aux figures 7 et 8, le dispositifs de distribution 2, 9, 10 comportent successivement des séries identiques de six volets 35-40, les volets de chacune de ces séries se différenciant les uns des -autres par la disposition des roulettes 43-48 associées à ces derniers.

Ainsi chacune de ces séries comporte trois premiers volets 35-37 dotés, au niveau d'une de leurs extrémités, de roulettes 43a, 44a, 45a décalées latéralement les unes par rapport aux autres, et au niveau de leur autre extrémité, de trois roulettes 43b, 44b, 45b alignées longitudinalement et distantes d'une distance "a" de ladite extrémité de volet.

Chaque série de volets comporte, en outre, trois autres volets 38-40, dotés, au niveau d'une de leurs extrémités, de trois roulettes 46a, 47a, 48a alignées longitudinalement et distantes d'une distance "b" supérieure à "a" de ladite extrémité de volet, et au niveau de leur autre extrémité, de trois roulettes 46b, 47b, 48b décalées latéralement les unes par rapport aux autres.

De plus, tel que représenté à la figure 7, les pistes du dispositif de distribution 2 du premier poste sont au nombre de trois décalées verticalement :
- une première piste supérieure 49 se prolongeant au niveau de la zone de changement 34a et s'interrompant à l'aplomb du tapis d'évacuation 18, adaptée pour provoquer un basculement de tous les volets 35-40 permettant d'éliminer tous les produits présentant un diamètre inférieur à un calibre donné,
- une deuxième piste intermédiaire 50 dotée de rétrécissements d'interruption de la surface de roulement aptes à provoquer le basculement de trois volets 35-37 au droit d'une bande transporteuse 3, et simultanément le basculement de trois autres volets 38-40 au droit de l'autre bande transporteuse 4,
- une troisième piste inférieure 51 s'interrompant à l'aplomb du tapis d'évacuation 19, adaptée pour provoquer un basculement total de tous les volets 35-40 .

A titre d'exemple, les moyens de basculement de ce premier dispositif de distribution 2 permettent d'éliminer les carottes présentant un diamètre inférieurà 22 mm ou supérieur à 45 mm.

Tel que représenté à la figure 8, les dispositifs de distribution 9, 10 comportent, quant à eux une piste supérieure 52 dotée de rétrécissements d'interruption de la surface de roulement des roulettes 43-48 aptes à provoquer le basculement simultané de six volets 35-40 au droit de six lignes de transport, et une piste inférieure 53 apte à éviter des rebonds intempestifs desdits volets.

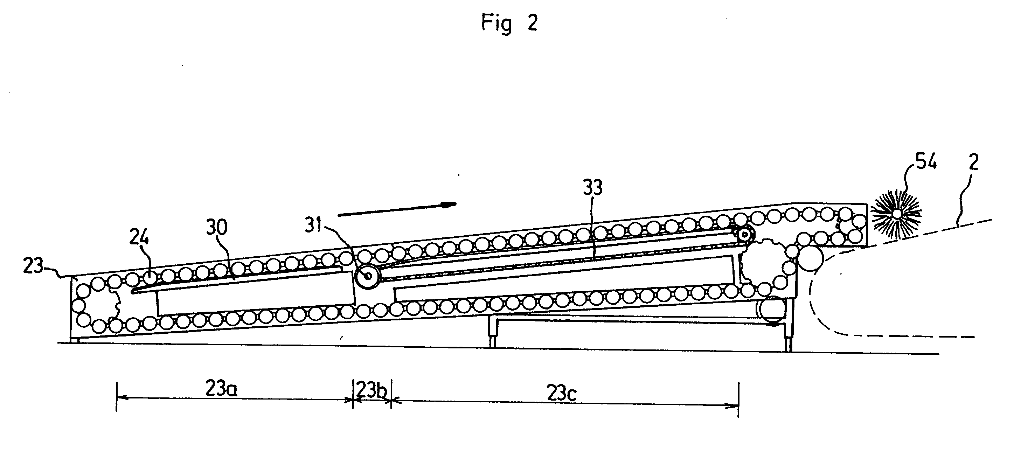

En dernier lieu, les dispositifs de distribution 9, 10 comportent un rouleau à brosse 54, représenté à la figure 2, interposé entre la zone de chargement 34a du convoyeur 34 et l'extrémité supérieure des dispositifs d'alimentation 1, 7, 8, et entraîné en rotation en synchronisme avec les chaînes sans fin 137, selon un sens de rotation inverse par rapport au sens de défilement dudit convoyeur 34. Un tel rouleau à brosse 54 a pour but d'éviter les rebonds des produits et d'assurer une synchronisation parfaite.

Les moyens de transfert comportent, quant à eux, douze lignes de transport telles que 55, 56 agencées pour réceptionner chacune une rangée de produits distribuée par les dispositifs 9, 10. En outre, six de ces lignes de transport, telles que 55, présentent un tronçon initial 55a adapté pour se trouver à l'aplomb du dispositif de distribution 9, tandis que les six autres lignes de transport telles que 56, sont interrompues au droit de l'autre dispositif de distribution 10.

Chacune de ces lignes de transport 55, 56 comporte deux bandes transporteuses parallèles 57, 58 entraînées en synchronisme, agencées relativement l'une par rapport à l'autre de façon à définir transversalement une goulotte en forme V apte à loger et transporter les produits.

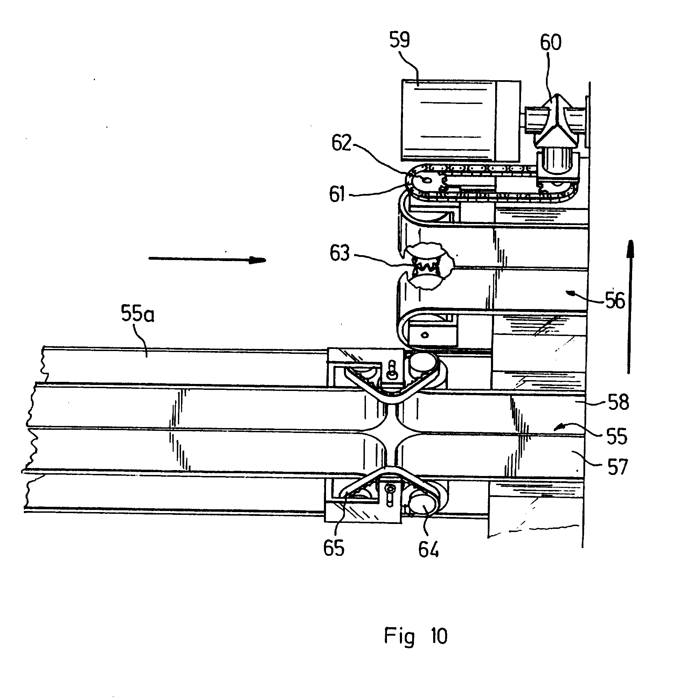

Les moyens d'entraînement de ces lignes de transport 55, 56 comprennent un moto-réducteur 59 et un système de transmission comportant un renvoi d'angle 60 et une transmission mécanique chaîne 61/roues dentées 62 (à titre de simplification, le système de transmission d'une seule des lignes de transport 56 a été représentée sur la figure 10). De plus, les deux bandes transporteuses 57, 58 de chaque ligne de transport 55, 56 sont accouplées au moyen de pignons coniques 63.

En outre, le tronçon initial 55a des lignes de transport 55 est relié au tronçon principal de ces dernières par une transmission du type roue dentée 64/courroie crantée 65 apte à conférer une même vitesse de défilement auxdits tronçons.

Les moyens de transfert comprennent, enfin, pour chaque ligne de transport 55, 56, un tronçon terminal tel que 55b de liaison avec la calibreuse 12, relié au tronçon principal desdites lignes de transport 55, 56 par une transmission de démultiplication du type poulies 66/tendeur 67 apte à conférer audit tronçon terminal une vitesse de défilement supérieure à celle du tronçon principal et égale à celle de la calibreuse 12.

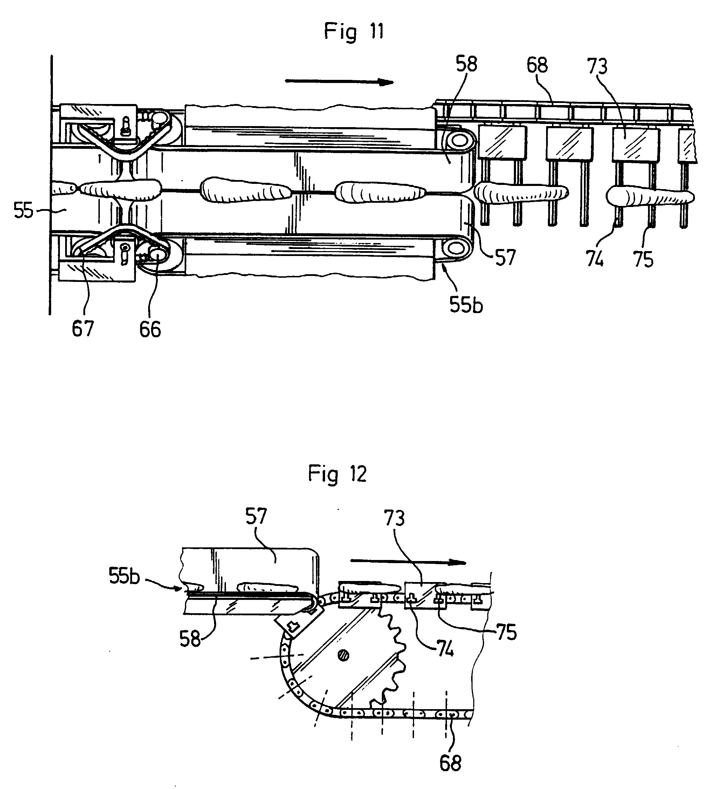

Tel que représenté à la figure 11, un tel tronçon terminal 55b permet d'accélérer le déplacement des produits, provoquant ainsi une séparation plus marquée de ces derniers favorisant leur analyse optique.

En dernier lieu, la calibreuse 12 comprend un convoyeur comportant également douze lignes de transport entraînées en synchronisme, disposées chacune dans le prolongement d'une ligne de transport 55, 56 des moyens de transfert.

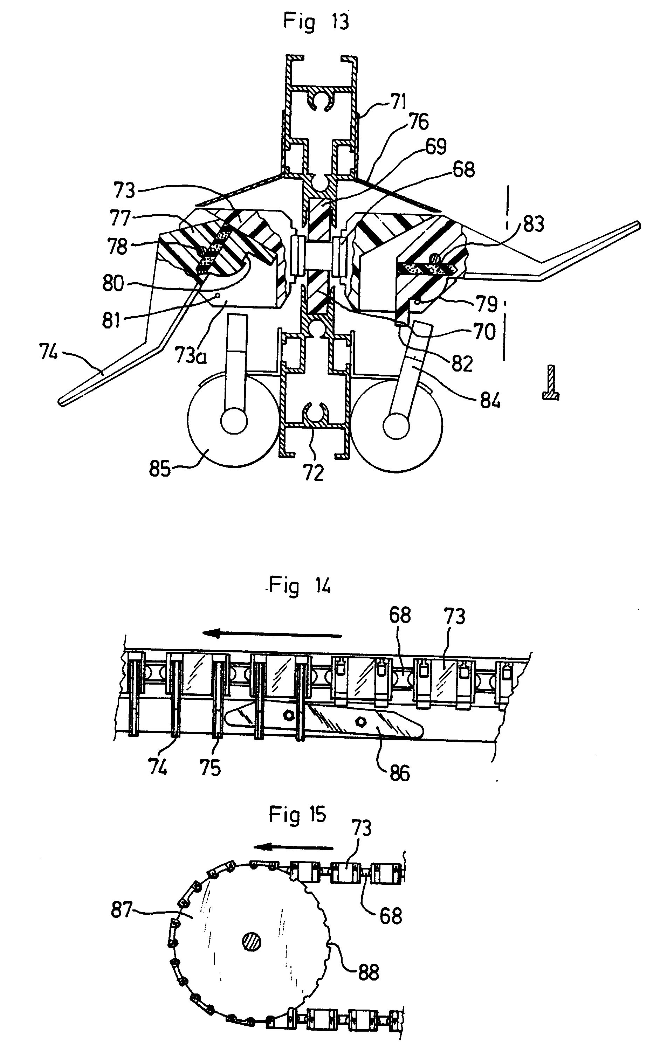

Ce convoyeur comprend six chaînes sans fin telles que 68 entraînées en synchronisme, agencées chacune pour défiler entre deux patins de friction 69, 70 logés dans des rainures en regard ménagées dans deux profilés supérieur 71 et inférieur 72. Tel que représenté à la figure 13, chacune de ces chaînes 68 porte deux séries de supports tels que 73 disposés en vis-à-vis de part et d'autre de ladite chaîne, sur chacun desquels sont articulés deux doigts de convoyage transversaux tels que 74, 75 dotés de moyens de verrouillage aptes à les maintenir dans une position de convoyage dans laquelle chaque produit est porté par un nombre de doigts donné fonction de la longueur dudit produit. De plus, le profilé supérieur 72 comporte un chapeau 76 agencé pour venir tangenter avec la face supérieure des supports 73, de façon à éviter à ces derniers de basculer transversalement relativement audit profilé.

En premier lieu, chaque doigt de convoyage 74, 75 présente une forme longitudinale concave et une section en forme de T renversé. Une telle section, associée au mode de répartition des doigts de convoyage 74, 75, permet de masquer le moins possible la surface des produits, de façon à obtenir une vision optimale desdits produits.

De plus, chacun de ces doigts de convoyage est prolongé, côté support 73, par un corps 77 agencé pour venir se loger dans une glissière transversale 73a ménagée dans ledit support.

Ce corps 77 comporte, en premier lieu, un orifice oblong à grand axe vertical logeant un axe d'articulation 78 solidaire du support 73, apte à permettre un débattement des doigts de convoyage 74, 75 selon une direction verticale. De plus, ce corps 77 comporte transversalement une face frontale inférieure 79 en forme de quart de cercle dans laquelle est ménagée, en partie basse, une encoche inférieure 80 apte à loger, dans la position de convoyage, un ergot 81 solidaire du support 73.

Le corps 77 des doigts de convoyage 74, 75 comprend par ailleurs un talon d'éjection 82 prolongeant ledit corps vers le bas et disposé à l'opposé de la face inférieure 79 par rapport à l'encoche 80.

Chaque corps 77 des doigts de convoyage 74, 75 comporte, enfin, un tampon 83 en un matériau compressible logé dans un orifice transversal agencé pour déboucher dans la partie inférieure du trou oblong, et adapté pour faire office de moyens élastiques aptes à maintenir verrouillés lesdits doigts de convoyage et à éviter un déverrouillage accidentel non provoqué mécaniquement.

La calibreuse 12 comprend également des moyens de déclenchement disposés à l'aplomb des tapis 14, 15 d'évacuation des produits, adaptés pour engendrer de façon sélective le basculement d'un nombre de doigts de convoyage 74, 75 donné en vue du déchargement du produit porté par ceux-ci vers lesdits tapis d'évacuation.

Ces moyens de déclenchement comprennent une came profilée 84 portée par un électro-aimant 85 apte à la faire pivoter autour d'un axe longitudinal entre deux positions :
- une position active (représentée sur la gauche de la figure 13) où cette came 84 se trouve sur la trajectoire des talons 82 des doigts de convoyage 74, 75 et dans laquelle, grâce à son profil, elle provoque un déplacement vers le haut desdits talons et un basculement initial desdits doigts,
- et une position passive où cette came 84 permet le passage des talons 82.

La calibreuse 12 comporte, par ailleurs, des moyens de déclenchement final adaptés pour engendrer le basculement de tous les doigts de convoyage 74, 75 au droit du tapis d'évacuation 22. Tel que représenté à la figure 14, ces moyens de déclenchement comportent une rampe 86 agencée pour se trouver sur la trajectoire des talons 82 des doigts de convoyage 74, 75, et profilée pour initier le basculement de ces derniers.

La calibreuse 12 comporte, enfin, un organe d'appui 87 disposé en aval de la rampe 86, apte à provoquer un basculement des doigts de convoyage 74, 75 vers leur position verrouillée de convoyage. Tel que représenté à la figure 15, cet organe d'appui consiste en un disque 87 porté par l'arbre de rotation des chaînes 68, doté d'une tranche comportant des encoches 88 aptes à loger chacune un doigt de convoyage 74, 75 et à amener ce dernier à basculer vers le haut.

Bien que ces derniers ne soient pas décrits, l'unité de tri comporte, en outre, de façon classique, tous les organes de commande et d'automatisation permettant notamment de synchroniser les divers convoyeurs, et d'indexer la position des produits sur la calibreuse 12 en vue de commander le déclenchement des doigts de convoyage 74, 75 à l'aplomb des tapis d'évacuation 14, 15 adéquats.

## Revendications

1. Dispositif d'alimentation d'une unité de tri de produits longiformes, notamment de légumes tels que des carottes, apte, à partir d'un flot de produits délivrés en vrac, à ordonner ces produits selon des rangées parallèles dans chacune desquelles ledits produits sont alignés les uns à la suite des autres, ledit dispositif d'alimentation comprenant un convoyeur incliné (23) s'étendant selon une pente ascendante, comportant une pluralité de rouleaux transversaux (24) montés libres en rotation chacun autour d'un axe transversal (25) porté, vers ses extrémités, par deux chaînes sans fin longitudinales (26) entraînées en synchronisme, et espacés de façon que deux rouleaux (24) successifs définissent entre eux un logement pour un produit, ledit convoyeur comportant longitudinalement à partir de son extrémité basse d'admission des produits :
- un premier tronçon longitudinal inférieur (23a) comportant des moyens (30) d'entraînement en rotation des rouleaux (24) autour de leur axe (25), selon un même sens de rotation que le sens de défilement du convoyeur (23), caractérisé en ce qu'il comprend :
- un deuxième tronçon longitudinal intermédiaire (23b) le long duquel les rouleaux (24) sont libres en rotation,
- et un troisième tronçon longitudinal supérieur (23c) comportant des moyens (33) d'entraînement en rotation des rouleaux (24) autour de leur axe (25), selon un sens de rotation inverse par rapport au sens de défilement du convoyeur (23).

2. Dispositif d'alimentation selon la revendication 1, caractérisé en ce que le convoyeur (23) s'étend selon une pente inclinée d'un angle sensiblement compris entre quinze et vingt-cinq degrés.

3. Dispositif d'alimentation selon l'une des revendications 1 ou 2, caractérisé en ce que le tronçon intermédiaire (23b) du convoyeur (23) comprend une roue de friction (31) disposée de façon à présenter un contact tangentiel avec la génératrice inférieure des rouleaux (24), ladite roue de friction étant entraînée en rotation par les moyens (33) d'entraînement en rotation du tronçon supérieur (23c) dudit convoyeur.

4. Dispositif d'alimentation selon l'une des revendications précédentes, caractérisé en ce que l'axe (25) de chaque rouleau (24) comporte, vers une de ses extrémités, au moins une roue dentée (27, 28), les moyens d'entraînement en rotation desdits rouleaux consistant, au droit du tronçon inférieur (23a) en une chaîne fixe (30), et au droit du tronçon supérieur (23c) en une chaîne longitudinale sans fin (33) entraînée avec une vitesse de défilement sensiblement supérieure à celle du convoyeur (23), lesdites chaînes s'étendant selon une pente identique à celle dudit convoyeur et étant agencées pour engréner avec les roues dentées (27) des rouleaux (24).

5. Dispositif d'alimentation selon la revendication 4, caractérisé en ce qu'il comprend des éléments (29) de guidage latéral des roues dentées (27, 28) des axes (25) des rouleaux (24) aptes à maintenir lesdites roues le long d'une trajectoire rectiligne.

6. Dispositif d'alimentation selon la revendication 5, caractérisé en ce que chaque axe (25) de rouleau (24) comporte deux roues dentées espacées (27, 28), les organes de guidage latéral (29) étant agencés pour s'étendre longitudinalement dans l'espace délimité par lesdites roues dentées.

7. Dispositif d'alimentation selon l'une des revendications 4 à 6, caractérisé en ce que chaque chaîne (30, 33) d'entraînement en rotation des rouleaux (24) présente un tronçon inférieur initial (30a, 33a) s'étendant selon une pente présentant une inclinaison sensiblement supérieure à celle du convoyeur (23).

8. Unité de tri de produits longiformes, notamment de légumes tels que des carottes, caractérisée en ce qu'elle comprend :
- un dispositif d'alimentation (1) conforme à l'une des revendications 1 à 7,
- un dispositif (2) de distribution des produits comprenant un convoyeur (34) présentant une zone de chargement (34a) disposée à l'aplomb de l'extrémité supérieure du dispositif d'alimentation (1) et une zone de distribution (34b) s'étendant horizontalement, ledit convoyeur comportant :
. une pluralité de volets transversaux inclinés (35-40) aptes à pivoter chacun autour d'un axe transversal porté, vers ses extrémités, par deux chaînes sans fin longitudinales (137) entraînées en synchronisme, lesdits volets étant agencés pour que deux volets successifs définissent entre eux un logement de largeur variable en fonction de leur inclinaison respective,
. des moyens (43-51) de basculement des volets (35-40) adaptés, d'une part, pour les disposer selon une inclinaison déterminant une largeur àe logement minimale, au droit de la zone de chargement (34a), adaptée pour permettre de réceptionner la totalité des produits délivrés par le dispositif d'alimentation (1), et d'autre part, pour engendrer le basculement desdits volets de façon à leur conférer une inclinaison apte à permettre le déchargement des produits portés par ceux-ci au droit de zones de déchargement (3, 4, 18, 19),
- une calibreuse (12) dotée ce moyens d'analyse optique (13) et d'une pluralité de lignes de transport parallèles comportant des moyens de transfert (11) dotés d'un tronçon initial de chargement des produits disposé à l'aplomb d'une zone de déchargement du dispositif de distribution.

9. Unité de tri selon la revendication 8, caractérisée en ce que le dispositif de distribution (2) comprend un rouleau à brosse (54) interposé entre la zone de chargement (34a) dudit dispositif de distribution et l'extrémité supérieure du dispositif d'alimentation (1), et entraîné en rotation en synchronisme avec les chaînes sans fin (137) d'entraînement des volets (35-40), selon un sens de rotation inverse par rapport au sens de défilement desdites chaînes.

10. Unité de tri selon l'une des revendications 8 ou 9, caractérisé en ce que les volets (35-40) du dispositif de distribution (2) présentent transversalement la forme d'un V (41) s'ouvrant en direction de l'axe de pivotement, obturé au niveau de sa base par un tube creux (42) axé sur ledit axe de pivotement, de diamètre supérieur à la longueur de ladite base.

11. Unité de tri selon l'une des revendications 8 à 10, caractérisé en ce que :
- chaque volet (35-40) du dispositif de distribution (2) est doté, au droit d'au moins une de ses extrémités, d'une roulette (43-48) à axe de rotation horizontal parallèle à l'axe de pivotement desdits volets,
- les moyens de basculement comprennent au moins une piste longitudinale horizontale (49-51) agencée pour constituer une surface de roulement pour les roulettes (43-48), chacune desdites pistes étant dotée d'au moins une interruption de la surface de roulement au droit d'une zone de déchargement (3, 4, 18, 19), apte à conduire à un basculement des volets (35-40).

12. Unité de tri selon l'une des revendications 8 à 11, caractérisée en ce que les moyens (11) de transfert des produits comprennent, pour chaque ligne de transport, deux bandes transporteuses parallèles (57, 58) entraînées en synchronisme, agencées relativement l'une par rapport à l'autre de façon à définir transversalement une goulotte en forme de V apte à loger et transporter une rangée de produits.

13. Unité de tri selon la revendication 12, caractérisée en ce que les moyens de transfert (11) sont scindés longitudinalement en deux tronçons alignés dans le prolongement l'un de l'autre : un premier tronçon (55, 56) incorporant le tronçon initial de chargement, dont les deux bandes transporteuses (57, 58) sont entraînées en synchronisme avec une vitesse de défilement inférieure à celle de la calibreuse (12), et un tronçon terminal (55b) dont les bandes transporteuses (57, 58) sont entraînées avec une vitesse de défilement égale à celle de la calibreuse (12).

14. Unité de tri selon l'une des revendications 8 à 13, caractérisé en ce que les moyens (43-51) de basculement des volets (35-40) du dispositif de distribution (2) sont adaptés pour engendrer successivement :
- un basculement initial apte à écarter les volets (35-40) d'une distance prédéterminée adaptée pour engendrer l'élimination des produits présentant des dimensions transversales inférieures à une valeur inférieure de calibrage donnée,
- au moins un basculement supplémentaire apte à permettre le déchargement des produits de dimensions transversales comprises entre la valeur inférieure de calibrage et une valeur supérieure de calibrage donnée,
- un basculement supplémentaire final apte à permettre l'élimination de tous les produits non déchargés le long du convoyeur (34) du dispositif de distribution (2).

15. Unité de tri selon la revendication 14, caractérisé en ce qu'elle comprend :
- un premier dispositif d'alimentation (1) conforme à l'une des revendications 1 à 7,
- un premier dispositif de distribution (2) adapté pour éliminer les produits de dimensions respectivement inférieures à la valeur inférieure de calibrage et supérieures à la valeur supérieure de calibrage, et pour décharger alternativement un nombre de rangées de produits au droit de deux zones de déchargement (3, 4) successives,
- deux ensembles secondaires d'alimentation et de distribution parallèles s'étendant orthogonalement par rapport au premier dispositif de distribution (2), agencés pour être alimentés chacun en produits délivrés au droit d'une des zones de déchargement (3, 4) dudit premier dispositif de distribution,
. chacun desdits ensembles comportant successivement un dispositif d'alimentation (7, 8) conforme à l'une des revendications 1 à 7, et un dispositif de distribution (9, 10),
. le dispositif de distribution (9) d'un desdits ensembles étant adapté pour posséder une zone de déchargement apte à permettre de décharger simultanément un nombre n de rangées de produits à l'aplomb de n lignes de transport (55) des moyens de transfert (11) de la calibreuse (12),
. le dispositif de distribution (10) de l'autre ensemble présentant une longueur supérieure à celui du premier ensemble, et étant adapté pour posséder une zone de déchargement apte à permettre de décharger un nombre m de rangées de produits à l'aplomb de m lignes de transport (56) des moyens de transfert (11) de la calibreuse (12) parallèles aux n lignes de transport précitées.

16. Unité de tri selon la revendication 15, caractérisée en ce que chaque ensemble secondaire d'alimentation et de distribution comprend une bande transporteuse (3, 4) d'amenée des produits en vrac vers le dispositif d'alimentation (7, 8), dotée d'un tronçon initial de chargement disposé à l'aplomb d'une des zones de déchargement du premier dispositif de distribution (2), et un convoyeur à grille (5, 6) interposé entre ladite bande transporteuse et le dispositif d'alimentation (7, 8) associé, apte à permettre l'élimination de morceaux de produits.

17. Unité de tri selon l'une des revendications 8 à 16, caractérisé en ce que la calibreuse (12) comprend un convoyeur comportant :
- une pluralité de doigts de convoyage (74, 75) transversaux. et parallèles, articulés sur des supports (73) portés par des chaînes sans fin longitudinales (68) agencées pour qu'une série longitudinale de doigts de convoyage (74, 75) s'étende dans le prolongement de chaque ligne de transport (55, 56) des moyens de transfert (11), lesdits doigts étant dotés de moyens de verrouillage (80-82) aptes à les maintenir dans une position de convoyage dans laquelle un produit est porté par un nombre de doigts successifs donné,
- des moyens (84, 85) de déclenchement des moyens (80-82) de verrouillage des doigts de convoyage (74, 75) adaptés pour engendrer de façon sélective le basculement d'un nombre de doigts donné en vue du déchargement au produit porté par ceux-ci dans des zones de déchargement (14, 15).

18. Unité de tri selon la revenàication 17, caractérisé en ce que chaque chaîne sans fin (68) de la calibreuse (12) porte deux séries de supports (73) en vis-à-vis disposés de part et d'autre de ladite chaîne.

19. Unité de tri selon l'une des revendications 17 ou 18, caractérisé en ce que :
- chaque doigt de convoyage (74, 75) est prolongé par un corps (77) comportant un orifice présentant une forme oblongue à grand axe vertical logeant un axe d'articulation (78) solidaire d'un support (73), apte à permettre un débattement dudit doigt selon une direction verticale, ledit corps comportant transversalement une face inférieure frontale convexe (79) dans laquelle est ménagée une encoche inférieure (80) apte à loger, dans la position de convoyage, un ergot (81) solidaire du support (73), et un talon d'éjection (82) prolongeant ledit corps vers le bas et disposé à l'opposé de la face inférieure convexe (79) par rapport à l'encoche (80),
- les moyens de déclenchement comportent une came (84) associée à des moyens de pivotement (85) aptes à la faire basculer autour d'un axe longitudinal, entre une position active où elle se trouve sur la trajectoire des talons (82) des doigts de convoyage (74, 75) et provoque un déplacement vers le haut desdits talons et un basculement initial desdits doigts, et une position passive où ladite came permet le passage des talons (82).

20. Unité de tri selon la revendication 19, caractérisé en ce que chaque doigt de convoyage (74, 75) comporte un tampon (83) en un matériau compressible logé dans l'orifice oblong, adapté pour faire office de moyens élastiques aptes à maintenir verrouillés lesdits doigts de convoyage.

21. Unité de tri selon l'une des revendications 17 à 20, caractérisée en ce que chaque doigt de convoyage (74, 75) présente une forme longitudinale concave et une section en forme de T inversé.

22. Unité de tri selon l'une des revendications 17 à 21, caractérisé en ce que chaque support (73) est adapté pour porter deux doigts de convoyage (74, 75).

23. Unité de tri selon l'une des revendications 17 à 22, caractérisée en ce que la calibreuse (12) comprend des moyens de déclenchement final (86) adaptés pour engendrer le basculement de la totalité des doigts de convoyage (74, 75) au droit d'une zone de déchargement (22) située vers l'extrémité postérieure du convoyeur.

24. Unité de tri selon la revendication 23, caractérisée en ce que la calibreuse (12) comprend un organe d'appui (87) disposé en aval des moyens de déclenchement final (86) apte à provoquer un basculement des doigts de convoyage (74,75) vers leur position verrouillée de convoyage.

## Patentansprüche

1. Versorgungsvorrichtung einer Sortiereinheit von länglichen Produkten, insbesondere von Gemüse wie beispielsweise Karotten, die geeignet ist, diese Produkte ab einem in loser Schüttung gelieferten Produktfluss nach parallelen Reihen zu ordnen, in denen die besagten Produkte hintereinander ausgerichtet werden, wobei die besagte Versorgungsvorrichtung ein schräges Förderband (23) aufweist, das sich nach einem steigenden Gefälle erstreckt, mit einer Vielzahl von Querrollen (24), die jeweils rotationsfrei um eine Querachse (25) herum montiert sind, die an ihren Enden von zwei endlosen, synchron angetriebenen Längketten (26) getragen wird, und die so angeordnet sind, dass zwei aufeinanderfolgende Rollen (24) zwischen sich eine Aufnahme für ein Produkt bilden, wobei das besagte Förderband in Längsrichtung ab seinem unteren Produktzufuhrende umfasst :
- einen ersten unteren Längsabschnitt (23a) mit Rotationsantriebsmitteln (30) der Rollen (24) um ihre Achse (25) herum, nach einer gleichen Rotationsrichtung wie die Laufrichtung des Förderbands (23), dadurch gekennzeichnet, dass es umfasst :
- einen zweiten Zwischenlängsabschnitt (23b) entlang dem die Rollen (24) rotationsfrei sind,
- und einen dritten oberen Längsabschnitt (23c) mit Rotationsantriebsmitteln (33) der Rollen (24) um ihre Achse (25) herum, nach einer entgegen der Laufrichtung des Förderbands (23) verlaufenden Rotationsrichtung.

2. Versorgungsvorrichtung nach Anspruch 1, dadurch gekennzeichnet, dass sich das Förderband (23) nach einem um einen etwa fünfzehn bis fünfundzwanzig Grad grossen Winkel geneigten Gefälle erstreckt.

3. Versorgungsvorrichtung nach einem der Ansprüche 1 oder 2, dadurch gekennzeichnet, dass der Zwischenabschnitt (23b) des Förderbands (23) ein Reibungsrad (31) umfasst, das so angeordnet ist, dass es einen tangentiellen Kontakt mit der unteren Erzeugenden der Rollen (24) aufweist, wobei das besagte Reibungsrad von den Rotationsantriebsmitteln (33) des oberen Abschnitts (23c) des besagten Förderbands angetrieben wird.

4. Versorgungsvorrichtung nach einem der vorstehend genannten Ansprüche, dadurch gekennzeichnet, dass die Achse (25) jeder Rolle (24) an einem ihrer Enden mindestens ein Zahnrad (27, 28) umfasst, während die Rotationsantriebsmittel der besagten Rollen, im Bereich des unteren Abschnitts (23a), aus einer festen Kette (30) und, im Bereich des oberen Abschnitts (23c), aus einer endlosen, mit einer etwas höheren Laufgeschwindigkeit als diejenige des Förderbands (23) angetriebenen Längskette (33) bestehen, wobei sich die besagten Ketten nach einem mit demjenigen des besagten Förderbands identischen Gefälle erstrecken und so angeordnet sind, dass sie in die Zahnräder (27) der Rollen (24) eingreifen.

5. Versorgungsvorrichtung nach Anspruch 4, dadurch gekennzeichnet, dass sie seitliche Führungselemente (29) der Zahnräder (27, 28) der Achsen (25) der Rollen (24) umfasst, um die besagten Räder entlang einer geradlinigen Strecke festzuhalten.

6. Versorgungsvorrichtung nach Anspruch 5, dadurch gekennzeichnet, dass jede Achse (25) der Rollen (24) zwei in Abstand angeordnete Zahnräder (27, 28) umfasst, wobei die seitlichen Führungsorgane (29) so angeordnet sind, dass sie sich in Längsrichtung in dem von den besagten Zahnrädern abgegrenzten Raum erstecken.

7. Versorgungsvorrichtung nach einem der Ansprüche 4 bis 6, dadurch gekennzeichnet, dass jede Rotationsantriebskette (30, 33) der Rollen (24) einen anfänglichen unteren Abschnitt (30a, 33a) aufweist, der sich nach einem Gefälle erstreckt, das etwas grösser ist als dasjenige des Förderbands (23).

8. Sortiereinheit von länglichen Produkten, insbesondere von Gemüse wie beispielsweise Karotten, dadurch gekennzeichnet, dass sie umfasst :
- eine Versorgungsvorrichtung (1) nach einem der Ansprüche 1 bis 7,
- eine Verteilungsvorrichtung (2) der Produkte, mit einem Förderband (34), das eine Ladezone (34a) aufweist, die lotrecht zum oberen Ende der Versorgungsvorrichtung (1) angeordnet ist, und eine sich in horizontaler Richtung erstreckende Verteilungszone (34b), wobei das besagte Förderband umfasst :
. eine Vielzahl von geneigten Querklappen (35-40), die jeweils um eine Querachse herum schwenkbar sind, die an ihren Enden von zwei endlosen, synchron angetriebenen Längsketten (137) getragen wird, wobei die besagten Klappen so angeordnet sind, dass zwei aufeinanderfolgende Klappen zwischen sich eine Aufnahme bilden, deren Breite entsprechend ihrer jeweiligen Neigung variabel ist,
. Kippmittel (43-51) der Klappen (35-40), die geeignet sind, um sie einerseits nach einer Neigung einzustellen, die eine minimale Aufnahmebreite definiert, im Bereich der Ladezone (34a), die die Annahme aller von der Versorgungsvorrichtung (1) gelieferten Produkte ermöglicht, und andererseits, um das Kippen der besagten Klappen zu verursachen, so dass sie eine Neigung aufweisen, um das Entladen der von ihnen getragenen Produkte im Bereich der Entladenzonen (3, 4, 18, 19) zu ermöglichen.
- eine Kalibriervorrichtung (12) mit optischen Analysemitteln (13) und einer Vielzahl von parallelen Transportlinien mit Transfermitteln (11), die einen Anfangsabschnitt zum Laden der Produkte aufweisen, der lotrecht zu einer Entladezone der Verteilungsvorrichtung angeordnet ist.

9. Sortiereinheit nach Anspruch 8, dadurch gekennzeichnet, dass die Verteilungsvorrichtung (2) eine zwischen der Ladezone (34a) der besagten Verteilungsvorrichtung und dem oberen Ende der Versorgungsvorrichtung (1) angeordnete Bürstenrolle (54) umfasst, die mit den endlosen Antriebsketten (137) der Klappen (35-40) synchronisiert angetrieben wird, nach einer der Laufrichtung der besagten Ketten entgegengesetzten Rotationsrichtung.

10. Sortiereinheit nach einem der Ansprüche 8 oder 9, dadurch gekennzeichnet, dass die Klappen (35-40) der Verteilungsvorrichtung (2) in Querrichtung eine V-Form (41) aufweisen, die sich in Richtung der Schwenkachse öffnet und an seiner Basis von einem auf die besagte Schwenkachse ausgerichteten Hohlrohr (42) verschlossen ist, mit einem grösseren Durchmesser als die Länge der besagten Basis.

11. Sortiereinheit nach einem der Ansprüche 8 bis 10, dadurch gekennzeichnet, dass :
- jede Klappe (35-40) der Verteilungsvorrichtung (2), im Bereich von mindestens einem ihrer Enden, mit einer Rolle (43-48) ausgerüstet ist, deren horizontale Rotationsachse parallel zur Schwenkachse der besagten Klappen verläuft,
- die Kippmittel mindestens eine horizontale Längspiste (49-51) umfassen, die so angeordnet ist, dass sie eine Rollfläche für die Rollen (43-48) bildet, wobei jede der besagten Pisten mindestens eine Unterbrechung an der Rollfläche im Bereich einer Entladezone (3, 4, 18, 19) aufweist, die zu einem Kippen der Klappen (35-40) führen kann.

12. Sortiereinheit nach einem der Ansprüche 8 bis 11, dadurch gekennzeichnet, dass die Produkttransfermittel (11) für jede Transportlinie zwei parallele, synchron angetriebene Transportbänder (57, 58) aufweist, die so in Bezug zueinander angeordnet sind, dass sie in Querrichtung eine V-förmige Rinne bilden, in der eine Reihe von Produkten aufgenommen und transportiert werden kann.

13. Sortiereinheit nach Anspruch 12, dadurch gekennzeichnet, dass die Tranfermittel (11) in Längsrichtung in zwei sich verlängernde Abschnitte unterteilt sind : der erste Abschnitt (55, 56) umfasst den anfänglichen Ladeabschnitt, dessen beiden Transportbänder (57, 58) synchron mit einer Laufgeschwindigkeit angetrieben werden, die kleiner ist als diejenige der Kalibriervorrichtung (12) ; und ein Endabschnitt (55b), dessen Transportbänder (57, 58) mit einer Laufgeschwindigkeit angetrieben werden, die derjenigen der Kalibriervorrichtung (12) entspricht.

14. Sortiereinheit nach einem der Ansprüche 8 bis 13, dadurch gekennzeichnet, dass die Kippmittel (43-51) der Klappen (35-40) der Verteilungsvorrichtung (2) geeignet sind, um nacheinander auszulösen :
- ein anfängliches Kippen, um die Klappen (35-40) um einen vorgegebenen Abstand zu versetzen, um die Aussonderung der Produkte zu veranlassen, die kleinere Querabmessungen aufweisen als ein gegebener unterer Kalibrierwert,
- mindestens ein zusätzliches Kippen, um das Entladen der Produkte mit Querabmessungen zu ermöglichen, die zwischen dem unteren Kalibrierwert und einem gegebenen oberen Kalibrierwert liegen,
- ein zusätzliches Endkippen, um die Aussonderung aller nicht entladenen Produkte entlang dem Förderband (34) der Verteilungsvorrichtung (2) zu ermöglichen.

15. Sortiereinheit nach Anspruch 14, dadurch gekennzeichnet, dass sie umfasst :
- eine erste Versorgungsvorrichtung (1) nach einem der Ansprüche 1 bis 7,
- eine erste Verteilungsvorrichtung (2) zum Aussondern von Produkten mit jeweils kleineren Abmessungen als der untere Kalibrierwert und grösseren Abmessungen als der obere Kalibrierwert, und zum abwechselnden Entladen einer Anzahl von Produktreihen im Bereich beider aufeinanderfolgenden Entladezonen (3, 4),
- zwei sekundäre, parallele Versorgungs- und Verteilungsaggregate, die sich orthogonal zur ersten Verteilungsvorrichtung (2) erstrecken und so angeordnet sind, dass sie jeweils mit Produkten aus einer der Entladezonen (3, 4) der besagten ersten Verteilungsvorrichtung versorgt werden können,
. wobei jedes der beiden Aggregate nacheinander eine Versorgungsvorrichtung (7, 8) nach einem der Ansprüche 1 bis 7 und eine Verteilungsvorrichtung (9, 10) umfasst,
. wobei die Verteilungsvorrichtung (9) eines der besagten Aggregate geeignet ist, eine Entladezone aufzuweisen, die ermöglicht, gleichzeitig eine Anzahl n von Produktreihen lotrecht zu n Transportlinien (55) der Transfermittel (11) der Kalibriervorrichtung (12) zu entladen,
. wobei die Verteilungsvorrichtung (10) des anderen Aggregats eine grössere Länge aufweist als das erste Aggregat und geeignet ist, eine Entladezone aufzuweisen, die ermöglicht, eine Anzahl m von Produktreihen lotrecht zu m Transportlinien (56) der Transfermittel (11) der Kalibriervorrichtung (12) parallel zu den n vorgenannten Transportlinien zu entladen.

16. Sortiereinheit nach Anspruch 15, dadurch gekennzeichnet, dass jedes sekundäre Versorgungs- und Verteilungsaggregat ein Transportband (3, 4) für die Zuführung von Produkten in loser Schüttung zur Versorgungsvorrichtung (7, 8) umfasst, mit einem anfänglichen Ladeabschnitt, der lotrecht zu einer der Entladezonen der ersten Verteilungsvorrichtung (2) angeordnet ist, und einem Gitterförderband (5, 6) zwischen dem besagten Transportband und der ihm angeschlossenen Versorgungsvorrichtung (7, 8), das die Aussonderung von Produktstücken ermöglicht.

17. Sortiereinheit nach einem der Ansprüche 8 bis 16, dadurch gekennzeichnet, dass die Kalibriervorrichtung (12) ein Förderband umfasst, mit :
- einer Vielzahl von queren und parallelen Förderfingern (74, 75), die an Trägern (73) angegliedert sind, die von endlosen Längsketten (68) getragen werden, die so angeordnet sind, dass sich eine Längsreihe von Förderfingern (74, 75) in der Verlängerung jeder Transportlinie (55, 56) der Transfermittel (11) erstreckt, wobei die besagten Finger mit Verriegelungsmitteln (80-82) ausgerüstet sind, die sie in einer Förderposition festhalten können, in der ein Produkt von einer gegebenen Anzahl von aufeinanderfolgenden Fingern getragen wird,
- Auslösemitteln (84, 85) der Verriegelungsmittel (80-82) der Förderfinger (74, 75), die in selektiver Weise das Kippen einer gegenbenen Anzahl von Fingern bewirken können, um das von ihnen getragene Produkt in den Entladezonen (14, 15) zu entladen.

18. Sortiereinheit nach Anspruch 17, dadurch gekennzeichnet, dass jede endlose Kette (68) der Kalibriervorrichtung (12) zwei sich gegenüberliegende Trägerreihen (73) trägt, die auf beiden Seiten der besagten Kette angeordnet sind.

19. Sortiereinheit nach einem der Ansprüche 17 oder 18, dadurch gekennzeichnet, dass :
- jeder Förderfinger (74, 75) von einem Körper (77) verlängert wird, der eine längliche Öffnung mit grosser vertikaler Achse aufweist, in der eine mit einem Träger (73) verbundene Gelenkachse (78) untergebracht ist, die einen Ausschlag des besagten Fingers nach einer vertikalen Richtung ermöglicht, wobei der besagte Körper in Querrichtung eine konvexe, untere Vorderseite (79) aufweist, in der eine untere Nut (80) vorgesehen ist, um in der Förderposition einen am Träger (73) befestigten Nocken (81) aufzunehmmen, und einen Auswurfabsatz (82), der den besagten Körper nach unten hin verlängert und gegenüber der konvexen Unterseite (79) in Bezug auf die Nut (80) angeordnet ist,
- die Auslösemittel einen Nocken (84) umfassen, der Schwenkmitteln (85) zugeordnet ist, die ihn um eine Längsachse herum zwischen einer aktiven Position, in der er sich auf der Strecke der Absätze (82) der Förderfinger (74, 75) befindet und die Verschiebung nach oben der besagten Absätze sowie ein anfängliches Kippen der besagten Finger verursacht, und einer passiven Position, in der der besagte Nocken die Passage der Absätze (82) ermöglicht.

20. Sortiereinheit nach Anspruch 19, dadurch gekennzeichnet, dass jeder Förderfinger (74, 75) einen in der länglichen Öffnung angeordneten Puffer (83) aus einem zusammendrückbaren Material aufweist, um als elastische Mittel zu fungieren, um die besagten Förderfinger verriegelt zu halten.

21. Sortiereinheit nach einem der Ansprüche 17 bis 20, dadurch gekennzeichnet, dass jeder Förderfinger (74, 75) eine konkave Längsform und einen Querschnitt in Form eines umgekehrten T aufweist.

22. Sortiereinheit nach einem der Ansprüche 17 bis 21, dadurch gekennzeichnet, dass jeder Träger (73) geeignet ist, um zwei Förderfinger (74, 75) zu tragen.

23. Sortiereinheit nach einem der Ansprüche 17 bis 22, dadurch gekennzeichnet, dass die Kalibriervorrichtung (12) Endauslösemittel (85) umfasst, die das Kippen sämtlicher Förderfinger (74, 75) im Bereich einer Entladezone (22) am hinteren Ende des Förderbands bewirken können.

24. Sortiereinheit nach Anspruch 23, dadurch gekennzeichnet, dass die Kalibriervorrichtung (12) ein den Endauslösemitteln (86) nachgelagertes Stützorgan (87) umfasst, das ein Kippen der Förderfinger (74, 75) in ihre verriegelte Förderposition bewirken kann.

## Claims

1. Device for feeding a unit for sorting products of elongated shape, notably vegetables such as carrots, capable, starting from a flow of products supplied in bulk, of ordering these products into parallel rows within each of which, said products are aligned one after another, said feeding device including an inclined conveyor (23) that extends along an ascending slope, comprising a plurality of transverse rollers (24) each mounted to rotate freely about a transverse spindle (25) borne, toward its ends, by two longitudinal endless chains (26) driven in synchronised fashion, and spaced apart in such a way that two successive rollers (24) define between themselves accommodation for one product, said conveyor comprising longitudinally and starting from its lower end for the intake of products :
- a first lower longitudinal section (23a) comprising means (30) for driving rollers (24) in rotation about their spindles (25), in the same direction of rotation as the direction of travel of the conveyor (23), characterised in that it comprises :
- a second intermediate longitudinal section (23b) along which the rollers (24) are in free rotation,
- and a third upper longitudinal section (23c) comprising means (33) for driving rollers (24) in rotation about their spindles (25), in the opposite direction of rotation to the direction of travel of the conveyor (23).

2. Feeding device according to Claim 1, characterised in that the conveyor (23) extends along a slope inclined at an angle approximately between fifteen and twenty five degrees.

3. Feeding device according to one of Claims 1 and 2, characterised in that the intermediate section (23b) of the conveyor (23) comprises a friction wheel (31) arranged in a way that makes tangential contact with the lower generator of drive for the rollers (24), said friction wheel being driven in rotation by the means (33) for driving in rotation the upper section (23c) of said conveyor.

4. Feeding device according to one of the preceding Claims, characterised in that the spindle (25) of each roller (24) comprises, toward one of its ends, at least one toothed wheel (27, 28), the means of driving said rollers in rotation comprising with regard to the lower section (23a), a fixed chain (30) and with regard to the upper section (23c) a longitudinal endless chain (33) driven at a linear speed appreciably greater than that of the conveyor (23), said chains extending along a slope identical to that of said conveyor and being arranged so that they engage the toothed wheels (27) of the rollers (24).

5. Feeding device according to Claim 4, characterised in that it comprises elements (29) for laterally guiding the toothed wheels (27, 28) on the spindles (25) of the rollers (24) that are capable of holding said wheels along a rectilinear path.

6. Feeding device according to Claim 5, characterised in that each spindle (25) of a roller (24) comprises two spaced apart toothed wheels (27, 28), the lateral guidance devices (29) being fitted so as to extend longitudinally within the space bounded by said toothed wheels.

7. Feeding device according to one of Claims 4 to 6, characterised in that each chain (30, 33) for driving the rollers (24) in rotation has a lower initial section (30a, 33a) that extends along a slope having an inclination appreciably greater than that of the conveyor (23).

8. Unit for sorting products of elongated shape, notably vegetables such as carrots, characterised in that it comprises :
- a feeding device (1) conforming to one of Claims 1 to 7,
- a device (2) for the distribution of the products comprising a conveyor (34) having a loading area (34a) arranged at the base of the upper end of the feeding device (1) and a distribution area (34b) extending horizontally, said conveyor comprising :
• a plurality of inclined transverse flaps (35-40) each capable of pivoting about a transverse spindle borne, toward its ends, by two longitudinal endless chains (137) driven in synchronised fashion, said flaps being so arranged that two successive flaps define between them a compartment of a width that varies in relation to their respective inclination,
• means (43-51) of tilting the flaps (35-40) fitted, on the one hand in order to position them at an inclination that determines a minimum compartment width, with regard to the loading area (34a) suitable for allowing all of the products supplied by the feeding device (1) to be received and, on the other hand, fitted in order to cause the tilting of said flaps in a way that confers on them an inclination capable of allowing the discharge of products carried by them with respect to discharge areas (3, 4, 18, 19),
• a sizing device (12) fitted with optical analysis means (13) and a plurality of parallel transport lines comprising transfer means (11) fitted with an initial section for loading products positioned at the base of a discharge area of the distribution device.

9. A sorting unit according to Claim 8, characterised in that the distribution device (2) comprises a brush roller (54) positioned between the loading area (34a) of said distribution device and the upper end of the feeding device (1), and driven in rotation in a synchronised fashion with the endless chains (137) for driving the flaps (35-40), in a direction of rotation opposite to the direction of travel of said chains.

10. A sorting unit according to one of Claims 8 or 9, characterised in that the flaps (35-40) of the distribution device (2) transversely have the shape of a V (41) that is open in the direction of the pivoting spindle, closed off at its base by a hollow tube (42) centred around said pivoting spindle, of a diameter greater than the length of said base.

11. A sorting unit according to one of Claims 8 to 10, characterised in that :
- each flap (35-40) of the distribution device (2) is fitted at, at least one of its ends, with a follower (43-48) with a horizontal axis of rotation parallel to the pivoting axis of said flaps,
- the tilting means comprise at least one horizontal longitudinal track (49-51) arranged so as to form a rolling surface for the followers (43-48), each of said tracks being fitted with at least one interrupt for the rolling surface that relates to a discharge area (3, 4, 18, 19), and is capable of leading to tilting of the flaps (35-40).

12. A sorting unit according to one of Claims 8 to 11, characterised in that the means (11) for the transfer of products comprise, for each transport line, two parallel conveyor belts (57, 58) driven in synchronised fashion and so arranged in relation to one another that they define a V-shaped trough capable of accommodating and transporting a line of products

13. A sorting unit according to Claim 12, characterised in that the transfer means (11) are divided up longitudinally into two aligned sections, one the continuation of the other : a first section (55, 56) incorporating the initial loading section, whose two conveyor belts (57, 58) are driven in synchronised fashion with a linear speed lower than that of the sizing device (12), and an end section (55b) whose two conveyor belts (57, 58) are driven at a linear speed equal to that of the sizing device (12).

14. A sorting unit according to one of Claims 8 to 13, characterised in that the means (43-51) of tilting the flaps (35-40) of the distribution device (2) are adapted to successively generate :
- an initial tilt capable of separating the flaps (35-40) by a predetermined distance suited to cause the removal of products having transverse dimensions less than a given lower calibration value,
- at least one supplementary tilt capable of permitting the discharge of products with transverse dimensions between the lower calibration value and a given upper calibration value,
- a supplementary final tilt capable of allowing the removal of all the products not discharged along the conveyor (34) of the distribution device (2).

15. A sorting unit according to Claim 14, characterised in that it comprises :
- a first feeding device (1) conforming to one of Claims 1 to 7,
- a first distribution device (2) adapted to remove products of dimensions respectively less than the lower calibration value and greater than the upper calibration value, and to alternatively discharge a number of lines of products at two successive discharge areas (3, 4),
- two secondary parallel feeding and distribution assemblies that extend orthogonally in relation to the first distribution device (2) arranged so as to be each fed with products delivered to one of the discharge areas (3, 4) of said first distribution device,
• each of said assemblies comprising successively a feeding device (7, 8) conforming to one of Claims 1 to 7, and a distribution device (9, 10),
• the distribution device (9) of one of said assemblies being fitted out to have a discharge area capable of allowing the discharge simultaneously of a number n of lines of products at the base of n transport lines (55) of the transfer means (11) of the sizing device (12),
• the distribution device (10) of the other assembly having a length greater than that of the first assembly, and being fitted out to have a discharge area capable of allowing the discharge of a number m of lines of products at the base of m transport lines (56) of the transfer means (11) of the sizing device (12) parallel to the n transport lines previously mentioned.

16. A sorting unit according to Claim 15, characterised in that each secondary feeding and distribution assembly comprises a conveyor belt (3, 4) for bringing the products in bulk to the feeding device (7, 8), fitted with an initial loading section arranged at the base of one of the discharge areas of the first distribution device (2), and a grid conveyor (5, 6) positioned between said conveyor belt and the associated feeding device (7, 8), and capable of allowing the removal of pieces of product.

17. A sorting unit according to one of Claims 8 to 16, characterised in that the sizing device (12) comprises a conveyor comprising :
- a plurality of transverse, parallel conveying fingers (74, 75) that are articulated on supports (73) carried by longitudinal endless chains (68) so arranged that a longitudinal series of conveying fingers (74, 75) extends in a continuation of each transport line (55, 56) of the transfer means (11), said fingers being fitted with locking means (80-82) capable of holding them in a conveying position in which a product is carried by a given number of successive fingers,
- means (84, 85) of releasing the locking means (80-82) of the conveying fingers (74, 75) fitted for causing, in a selective way, the tipping over of a given number of fingers for the purposes of discharging the product being carried by them into discharge areas (14, 15).

18. A sorting unit according to Claim 17, characterised in that each endless chain (68) of the sizing device (12) carries two series of supports (73) arranged opposite one another on each side of said chain.

19. A sorting unit according to one of Claims 17 or 18, characterised in that :
- each conveying finger (74, 75) is extended by a body (77) that includes an orifice having an oblong shape with its large axis vertical that accommodates a hinge pin (78) integral with a support (73), capable of allowing displacement of said finger along a vertical direction, said body comprising transversely a convex front lower face (79) in which a lower notch (80) is provided capable of accommodating, in the conveying position, a lug (81) integral with the support (73) and an ejector stub (82) extending said body downward and arranged on the opposite side from the lower convex face (79) towards the notch (80),
- release means comprising a cam (84) linked to pivoting means (85) capable of tipping the cam over about a longitudinal axis between an active position where it is in the path of the stubs (82) of the conveying fingers (74, 75) and causes upward displacement of said stubs and an initial tipping over of said fingers and a passive position where said cam allows the stubs (82) to pass.

20. A sorting unit according to Claim 19, characterised in that each conveying finger (74, 75) comprises a buffer (83) made of a compressible material housed in the oblong orifice, fitted to act as elastic means capable of keeping said conveying fingers locked.

21. A sorting unit according to one of Claims 17 to 20, characterised in that each conveying finger (74, 75) has a concave shape longitudinally and a cross section in the shape of an inverted T.

22. A sorting unit according to one of Claims 17 to 21, characterised in that each support (73) is adapted to carry two conveying fingers (74, 75).

23. A sorting unit according to one of Claims 17 to 22, characterised in that the sizing device (12) comprises final release means (86) fitted to cause the tipping over of all the conveying fingers (74, 75) at a discharge area (22) situated towards the latter end of the conveyor.

24. A sorting unit according Claim 23, characterised in that the sizing device (12) comprises a component, positioned downstream from the final release means (86), for applying pressure (87) and capable of causing the conveying fingers (74, 75) to tip over into their locked conveying position.
